# EUROPEAN PATENT APPLICATION

(11) **EP 3 514 783 A1**
(43) Date of publication of application: **24.07.2019**
(21) Application number: 19152284.6
(22) Date of filing: 17.01.2019
(51) Int. Cl.: G09B 5/00

(54) **CONTEXTUAL LANGUAGE LEARNING DEVICE, SYSTEM AND METHOD**

(30) Priority: 17.01.2018 EP 18152073
(71) Applicant: Signum International AG, 6006 Luzern (CH)
(72) Inventor: ZHOU, Shijun, 6005 LUZERN (CH); OHMAYE, Enio, 6006 LUZERN (CH); SHIEL, Kenn, 6044 Udligenswil (CH)
(74) Representative: Brann AB

(57) **Abstract**

There is provided a system (100), device and method for enabling contextual language learning, by at least one context information device (120₁...120ₘ) being configured to generate a respective at least one context signal (S_{CTXT_1}...S_{CTXT_m}) indicative of a current context that the respective at least one context information device (120₁...120ₘ) is presently in; a contextual language learning device (110) being configured to determine a context based on the at least one context signal (S_{CTXT_1}...S_{CTXT_m}); and a machine learning module (115) being configured to, based on input data received by the contextual language learning device (110): process the input data to generate experience based data indicative of the language learning progress of a primary user (195) of the contextual language learning device (110); predict at least one language learning issue based on the generated experience based data; and generate a personalized language learning plan for the primary user (195) of the contextual language learning device (110) based on the predicted at least one language learning issue, for resolving the issues and improving the language learning process.

## Description

### TECHNICAL FIELD

The present disclosure relates to a device, system and method for enabling improved contextual language learning.

### BACKGROUND AND RELATED ART

Foreign language learning depends heavily on behaviours that are conducive to learning e.g., using the language in relevant contexts. Still, known foreign language learning systems often focus on the content and skills that students need to learn, but not on the behaviours that turn content and skills into productive abilities. Unless a student is studying abroad, in a country where the language to be studied is a native language of that country, most students learn a new language in a classroom and have few opportunities to use it outside of the classroom. Use of a foreign language at home is typically very difficult for the students.

There exist some solutions directed at contextual language learning. One example of related art is found in the patent document US 2015/0010889 A1, which discloses providing a foreign language acquisition and learning service based on context awareness by using a smart device. The user of the device is thereby enabled to study content suitable for the context in which he or she is currently situated.

However, as the inventors have realized, there is a need for improved solutions for enabling contextual language learning.

### SUMMARY

The present disclosure relates to a device, system and method for enabling improved contextual foreign language learning.

An aim of embodiments presented herein is to permeate the life of the learner with the language that they want to learn, which may be referred to as the target language, in ways that make its use relevant, meaningful, and effective. Another aim is to do so in a way that is enticing and engaging to the learner.

According to a first aspect, there is provided a system for enabling contextual language learning, the system comprising: at least one context information device configured to generate a respective at least one context signal S_{CTXT_1}...S_{CTXT_m}, wherein each of the at least one context signal S_{CTXT_1}...S_{CTXT_m} is indicative of a current context that the respective at least one context information device is presently in. The system comprises a contextual language learning device configured to: obtain at least one context signal S_{CTXT_1}...S_{CTXT_m} from the respective at least one context information device; and determine the current context that the contextual language learning device is presently in, based on the at least one context signal S_{CTXT_1}...S_{CTXT_m}. The system further comprises a first interface configured to enable communication between the contextual language learning device and at least one content source communicatively coupled to the contextual language learning device. A content source may in the present disclosure also be referred to as a database, a content database, or a source database. The contextual language learning device is further configured to receive data comprising one or more of: content and parameters stored in the database or content store; data from the one or more context information devices; data from the one or more support input device; user input parameters obtained via a second or third interface; and data stored in the contextual language learning device. The contextual language learning device is further configured to input the received data into a machine learning module, wherein the machine learning module comprises logic configured to: process the received data to generate experience based data indicative of the language learning progress of a primary user associated with the contextual language learning device; predict at least one language learning issue based on the generated experience based data; and generate a personalized language learning plan for a primary user of the contextual language learning device, based on the predicted at least one language learning issue, wherein the personalized language learning plan indicates one or more language learning action associated with a respective context in which the language learning action is to be performed; and obtain from at least one database, via the first interface, or from at least one support input device, via the second interface, at least one context based language learning action to be performed, based on the determined current context and the personalized language learning plan.

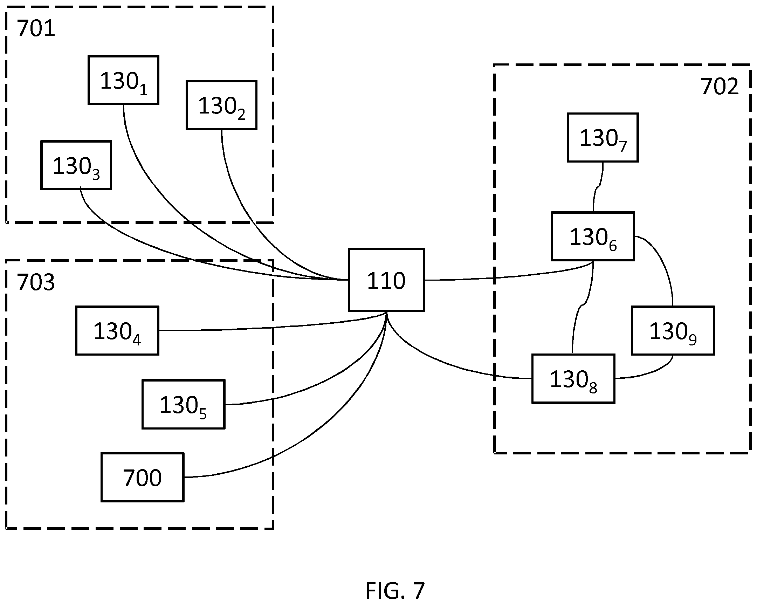

Thereby, language learning actions or interactions that are appropriate for the current context of the learner are prepared to be performed, whereby improved contextual foreign language learning is enabled. Advantageously, a personalized language learning plan is generated for the learner. Such a personalized language learning plan may span over a short time, such as days or weeks, or over many years, and may involve a limited number of actors in the form of the learner and one or more support user, or a large eco system of actors, as exemplified in Fig. 7. Thereby, language learning actions or interactions over time are selected, which are specifically adapted to aid the primary user of the contextual language learning device to obtain an improved learning progress and to overcome language learning issues that are specific for the user, based on knowledge about the user's learning progress, use of the language learning device and possibly input from support users, as well as knowledge of problems and working solutions/plans for other primary users of other contextual language learning devices communicatively connected to the same "eco system", e.g. via a common central server or cloud functionality.

Another advantage is that collection of data regarding the learner and/or the interaction between the learner and the contextual language learning device is enabled. Thereby, such data may be stored, processed and/or analysed, which in turn enables future improved experience based decisions on which language learning content or action to select to the learner based on the learner data and the determined current context.

In one or more embodiment, the system further comprises a second interface configured to enable communication between the contextual language learning device and at least one support input device, wherein the contextual language learning device is further configured to: receive, via the second interface, at least one support input signal from a respective at least one support input device; and obtain from at least one content source, via the first interface, or from at least one support input device, via the second interface, at least one context based language learning action to be performed also based on the at least one support input signal.

Consequently, improved contextual foreign language learning for children or other learners who have an increased need of input, feedback and support is advantageously enabled, as support and participation by others important to them, such as for example parents, teachers, classmates, managers, etc., referred to as support users in the detailed description, is enabled via the second interface, based on input from at least one support input device. In other words, support users are enabled to influence the language learning process. Support and participation by support users has a positive impact on the learner's motivation and language learning progress. Of course, any learner benefits from the input and support possibility, not only children and others with an increased need for such input.

In some embodiments, the contextual language learning device is further configured to, if a feedback sending condition is fulfilled, send a feedback signal S_{FB} indicative of the language learning progress and/or the usage of the contextual language learning device to at least one support input device, via the second interface, and/or at least one content source, via the first interface.

Support users, as defined in the detailed description, are thereby advantageously enabled to monitor and receive feedback regarding the language learning process and the interactions between the learner and the contextual language learning device, as further described in the detailed description.

In some embodiments, the contextual language learning device comprises a data processor configured to perform the functions of obtaining signals, determining context and obtaining at least one context based language learning action to be performed, according to embodiments presented herein.

In some embodiments, the system further comprises a third interface configured to receive input from a primary user interacting with the third interface, generate a user input signal S_{UI} in response to the received user input, and send the user input signal S_{UI} to the contextual language learning device. The contextual language learning device may in turn be configured to receive a user input signal S_{UI} from the third interface, interpret the user input signal S_{UI}, and, if the user input signal S_{UI} is interpreted as indicating content to be added, removed or updated, send the user input signal S_{UI} to at least one content source, via the first interface, wherein the at least one content source is configured to store, remove or update content in response to the received user input signal. If the user input signal S_{UI} is not interpreted as indicating content to be added, the contextual language learning device may in turn be configured to further base the obtaining of at least one context based language learning action from the at least one content source on the received user input signal S_{UI}.

Thereby, the learner, a support user or any other user interacting with the contextual language learning device is enabled to provide input to the contextual language learning device and influence the obtaining of at least one context based language learning action, i.e. influence the language learning process.

In one or more embodiments, the contextual language learning device is configured to generate output data D_{OUT}, based on the obtained at least one context based language learning action to be performed, and present the output data D_{OUT} to the primary user via the third interface.

Thereby, the system is configured to present the primary user/learner with the appropriate language learning actions or interactions that have been obtained specifically for the learner and the current context.

In one or more embodiments, the contextual language learning device is configured to receive, via the second interface, a content input signal S_{CI} indicative of new content to be added to the content source and/or an association between a context information device and a specified content item.

Thereby, a support user or an external data processor is enabled to add content to the content source and/or provide an association between a context information device and a specified content item, for example associating a sensor or the like that is located in a bathroom with an action or interaction relating to brushing teeth or showering, such as a song, a rhyme, asking related questions, telling the learner to brush teeth/shower etc..

The advantages of the first aspect are equally applicable to the corresponding embodiments of the second, third, fourth and fifth aspect.

According to a second aspect, there is provided a contextual language learning device for enabling contextual language learning, the device being configured to: obtain at least one context signal S_{CTXT_1}...S_{CTXT_m} from a respective at least one context information device, each of the at least one context signal S_{CTXT_1}...S_{CTXT_m} being indicative of a current context that the respective at least one context information device is presently in; determine the current context that the contextual language learning device is presently in, based on the at least one context signal S_{CTXT_1}...S_{CTXT_m}; and a first interface configured to enable communication between the contextual language learning device and at least one content source, or database, communicatively coupled to the contextual language learning device. The contextual language learning device is further configured to: receive data comprising one or more of: content and parameters stored in the database; data from the one or more context information devices; data from the one or more support input device; user input parameters obtained via a second or third interface; and data stored in the contextual language learning device. The contextual language learning device is further configured to: input the received data into a machine learning module, wherein the machine learning module comprises logic configured to: process the received data to generate experience based data indicative of the language learning progress of a primary user associated with the contextual language learning device; predict at least one language learning issue based on the generated experience based data; and generate a personalized language learning plan for a primary user of the contextual language learning device, based on the predicted at least one language learning issue, wherein the personalized language learning plan indicates one or more language learning action associated with a respective context in which the language learning action is to be performed. The contextual language learning device is further configured to: obtain from at least one content source, or database, via the first interface, or from at least one support input device, via the second interface, at least one context based language learning action to be performed, based on the determined current context and the personalized language learning plan.

In one or more embodiments, the contextual language learning device further comprises a second interface configured to enable communication between the contextual language learning device and at least one support input device, wherein the contextual language learning device is further configured to: receive, via the second interface, at least one support input signal S_{SI_1}... S_{SI_n} from a respective at least one support input device; and obtain from at least one content source, via the first interface, or from at least one support input device, via the second interface, at least one context based language learning action to be performed also based on the at least one support input signal S_{SI_1}...S_{SI_n}.

In one or more embodiments, the contextual language learning device is further configured to, if a feedback sending condition is fulfilled, send a feedback signal S_{FB} indicative of the language learning progress and/or the usage of the contextual language learning device to: at least one support input device, via the second interface, and/or at least one content source, via the first interface, and possibly via the network.

In one or more embodiments, the contextual language learning device is further configured to generate output data D_{OUT}, based on the obtained at least one context based language learning action to be performed, and present the output data D_{OUT} to the primary user, via a third interface (190).

According to a third aspect, there is provided a method in a contextual language learning device for enabling contextual language learning, the method comprising obtaining, by the contextual language learning device, at least one context signal S_{CTXT_1}...S_{CTXT_m} from a respective at least one context information device, each of the at least one context signal S_{CTXT_1}...S_{CTXT_m} being indicative of a current context that the respective at least one context information device is presently in, and determining, by the contextual language learning device, the current context that the contextual language learning device is presently in, based on the at least one context signal S_{CTXT_1}...S_{CTXT_m}. The method further comprises receiving data comprising one or more of: content and parameters stored in the database; data from the one or more context information devices; data from the one or more support input device; user input parameters obtained via the second or third interface; and data stored in the contextual language learning device. The method further comprises inputting the received data into a machine learning module, wherein the machine learning module comprises logic configured to: process the received data to generate experience based data indicative of the language learning progress of a primary user associated with the contextual language learning device; predict at least one language learning issue based on the generated experience based data; and generate a personalized language learning plan for the primary user associated with the contextual language learning device, based on the predicted at least one language learning issue, wherein the personalized language learning plan indicates one or more language learning action associated with a respective context in which the language learning action is to be performed. The method further comprises obtaining from at least one content source, via the first interface, or from at least one support input device, via the second interface, at least one context based language learning action to be performed, based on the determined current context and the personalized language learning plan.

In some embodiments, the method further comprises receiving in the contextual language learning device, via a second interface, at least one support input signal S_{SI_1}...S_{SI_n} from a respective at least one support input device, wherein obtaining, by the contextual language learning device, at least one context based language learning action to be performed is further based on the at least one support input signal S_{SI_1}...S_{SI_n}.

The method may further comprise, if a feedback sending condition is fulfilled, sending a feedback signal S_{FB} indicative of the language learning progress, or the usage of the contextual language learning device, or both to: at least one support input device, via the second interface, or at least one content source 160, via the first interface 140, or to both.

In one or more embodiments, the method may further comprise generating output data D_{OUT}, based on the obtained at least one context based language learning action to be performed, and presenting the output data D_{OUT} to a primary user, via a third interface.

According to a third aspect, there is provided a computer program loadable into a memory communicatively connected or coupled to at least one data processor, comprising software for executing the method steps according any of the method embodiments presented herein when the program is run on the at least one data processor.

According to a third aspect, there is provided a processor-readable medium, having a program recorded thereon, where the program is to make at least one data processor execute the method steps according any of the method embodiments presented herein when the program is loaded into the at least one data processor.

### BRIEF DESCRIPTION OF THE DRAWINGS

The invention is now to be explained more closely by means of preferred embodiments, which are disclosed as examples, and with reference to the attached drawings.
Figure 1 shows a schematic overview of a system according to one or more embodiments;
Figure 2 shows a schematic overview of a contextual language learning device according to one or more embodiments
Figure 3 is a flow chart of a method according to one or more embodiments;
Figure 4 is a flow chart of a method according to one or more embodiments;
Figure 5 is a flow chart of a method according to one or more embodiments;
Figure 6 shows an example of context triggered activities;
Figure 7 is a schematic overview of communication between different devices according to one or more embodiments; and
Figure 8 is a flow chart of a method according to one or more embodiments.

### DETAILED DESCRIPTION

### Introduction

The present disclosure describes a device, system and method for enabling contextual language learning. This is achieved by selecting context based language learning action(s) to be performed by a contextual language learning device, based on input from context information devices, support users, and/or a machine learning or artificial intelligence device, according to embodiments described herein.

According to one or more embodiment, a selection of context based language learning action(s) to be performed and/or interaction(s) to be prompted by a contextual language learning device and the timing and context for triggering the action(s) and/or interaction(s) may be comprised in a personalized language learning plan adapted to the learner/primary user associated with each specific contextual language learning device. Method embodiments herein may comprise, and contextual language learning devices herein may be configured to, generating, update or regenerate such a personalized language learning plan. Method embodiments herein may further comprise, and contextual language learning devices herein may further be configured to, using collected or input data to dynamically generating, updating or regenerating an improved personalized language learning plan, by predicting one or more language learning action(s) and/or interaction(s), and/or the context, order, timing etc. in which to trigger language learning actions and/or interactions, e.g., by means of a machine learning module 115, to enable improvement of the learning progress of the individual learner/primary user associated with the contextual language learning device in question.

In some embodiments the selected/obtained context based language learning action(s) are further performed, meaning that the action(s) is delivered or presented to a learner according to embodiments presented herein. In these embodiments, improved contextual language learning is further achieved.

In one or more embodiments, the present disclosure relates to contextual language learning that uses a physical language learning device. Alternatively, the language learning device is implemented as a mobile software application in a smart device of any kind known in the art. The language learning device according to any implementation is hereinafter referred to as a contextual language learning device.

Embodiments described herein help design and/or deliver "situations" or "experiences" that are conducive to using a target language.

Hereinafter, the terms foreign language learning, target language learning and language learning may be used interchangeably in the text and correspond to the language to be studied or learnt, unless otherwise defined in the text. Hereinafter, the terms student and learner may be used interchangeably.

By "using" we mean using any of the four skills: listening, speaking, reading and writing, but interactions in which these skills cause output from the learner in the form of verbal, written, or physical action are emphasized.

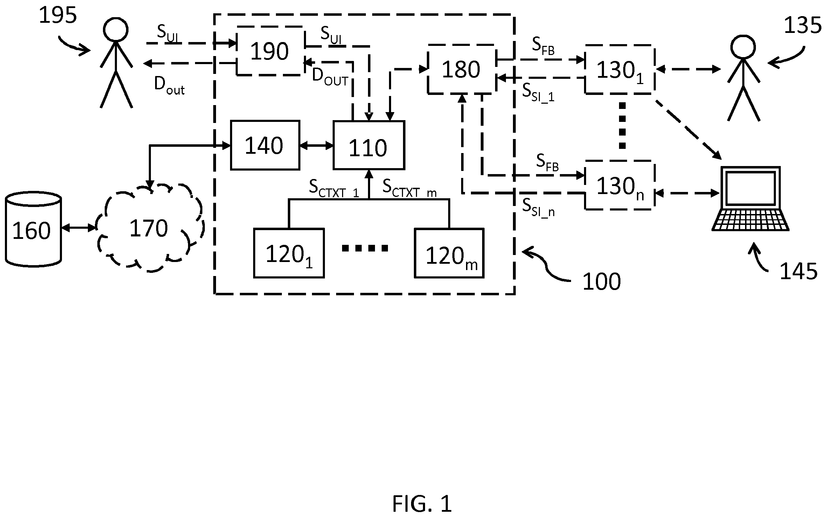

Children, especially young children, in order to learn a foreign language, are in need of improved contextual language learning systems and methods that are enticing to the children, stimulate interaction, and help "significant others", which may in the case of a child be a parent or other close relative, a caregiver or legal guardian, a teacher, classmates etc., who is not a native speakers of the foreign language to participate in the learning process. In the present disclosure, such "significant others" are defined as support users 135, as described in connection with **Fig. 1****.** Solutions for enabling the involvement of support users are provided by embodiments presented herein. Furthermore, embodiments herein enable easy retrieval of relevant learning material, and enable easy collection of user data that can be used to further improve the language learning system, device and method.

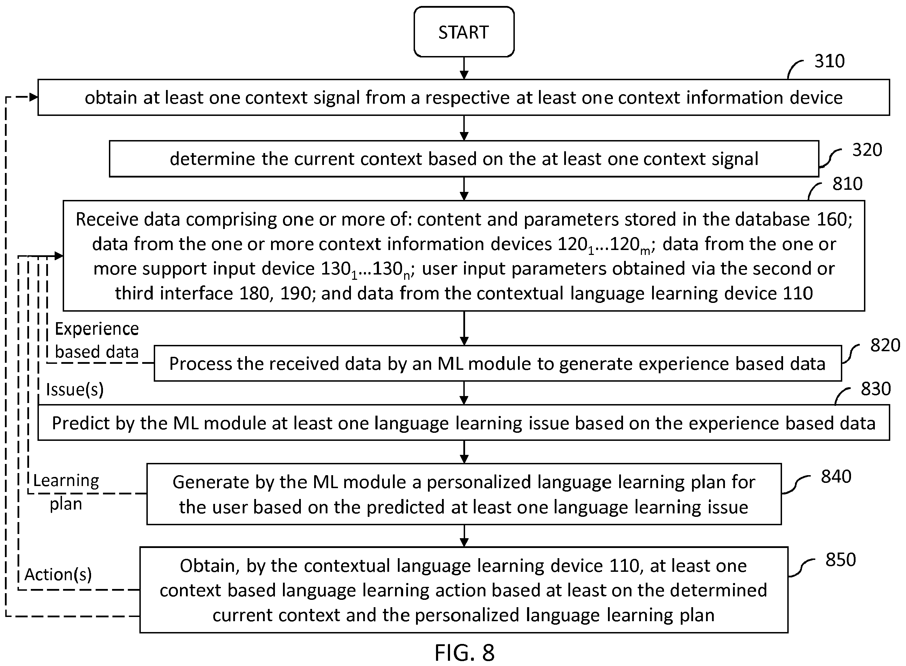

As described herein, such collected, or received, data, e.g. as exemplified in step 810 of Fig. 8, may be used for dynamically generating, updating or regenerating an improved personalized language learning plan, by processing the received input data to generate experience based data indicative of the language learning progress of a primary user 195 associated with the contextual language learning device; predicting at least one language learning issue based on the generated experience based data; and generating a personalized language learning plan for the primary user 195 of the contextual language learning device 110, for resolving the issues and improve the language learning process, based on the predicted at least one language learning issue and the current context determined according to embodiments herein. The personalized language learning plan may comprise one or more language learning action(s) and/or interaction(s), and/or the context, order, timing etc. in which to trigger language learning actions and/or interactions, e.g., to improve the learning progress of the individual learner/primary user associated with the contextual language learning device in question. Such a personalized language learning plan may span over a short time, such as days or weeks, or over many years, and may involve a limited number of actors in the form of the learner and one or more support user, or a large eco system of actors, as exemplified in Fig. 7.

Collected or input data, from one or more primary user's interaction with its associated contextual language learning device, from support users interacting with support devices, from context information devices etc., may also be used for dynamically generating, updating or regenerating a personalized language learning plan of the primary user 195 of the current contextual language learning deice 110, or plans for one or more other primary users 195, associated with a respective other contextual language learning device 110. In some embodiments, such exchange of collected or input data is enabled by the system described herein via the communication interfaces 140, 180 and the possibility to store data in and retrieve data from one or more source database 160 or other central storage (not shown in the figures) accessible by multiple contextual language learning devices 110, and possibly also support devices 130. By enabling such dynamic generation, updating or regeneration of an improved personalized language learning plan using machine learning, methods and systems presented herein enable automatically collecting or receiving input/information on different aspects of the primary user's 195 language learning progress and/or interactions with the contextual language learning device 110; process the collected or received input/information to detect problem patterns, and then finding a personalized "cure", in the form of a language learning plan, to resolve problems that a specific learner encounters with regard to his/her language learning progress.

In one or more non-limiting embodiments, the machine learning or AI algorithm/model may be configured to perform an assessment of the learner's language proficiency level and predict the one or more language learning action, interaction, context, order, and/or timing etc. in which to trigger language learning actions and/or interactions, e.g., to improve the learning progress of the individual learner also based on the assessed language proficiency level.

Using machine learning to make automatically draw conclusions and make predictions based on large collections of data, associated with the primary user 195, but possibly also related to numerous other users communicatively connected to the system, is very advantageous compared to previous solutions, which do not have access to the multi-connectivity between devices and/or machine learning capabilities.

The inventors have realized that although children today use more and more smart phones, computers and other connected devices with screens, mobile applications and such for language learning that are on the market are not interesting enough for children to focus on. Instead, children respond better to physical objects, which will feel more personal and engaging than a digital application. In one or more embodiments, the contextual language learning device may therefore be designed to appeal to children, for example by being in the form of a toy, a stuffed animal etc. The design and behaviour of the contextual language learning device is thereby appealing to the young students, giving them more chances/ encouraging them to interact in the target language, thus leading to better learning outcomes/results. In other embodiments, the language learning device may be implemented as a computer program or mobile software application in an electronic device of any kind known in the art, for example, but not limited to, a smart phone or a portable computing device.

The language learning device may be connected to a content source from where context appropriate content is obtained. Appropriateness of content may for example be driven by what a student is learning in school, and delivered by a contextual language learning device. The solution thereby elegantly brings the language learning into non-class environments, especially home environment.

Advantageously, the involvement of a "significant other" such as a parent, a close relative, a caregiver or legal guardian, a spouse, a teacher, classmates, managers, friends etc. is enabled in embodiments presented herein. Hereinafter, such persons may be collectively referred to as support users. This enablement of involvement is especially advantageous when the learner is a person who has an increased need of feedback, support and participation by others important to them, e.g. a young child. Furthermore, by instrumenting the main participants in the learner's experience, such as the support users, more data on the learning experience can be gathered via the interfaces 180, 190 described herein, that can be used to improve the contextual language learning experience. Yet another advantage of instrumenting the support users with control and monitoring devices, such as the support input devices further described herein, data collection is enabled, which data can be used to improve how the needs and preferences of the support users can be satisfied. A further advantage of the present solution is that for example a parent can easily engage with the contextual language learning device based on their abilities and situation. For example, an audio-driven activity - audio input from the user - is not disruptive to their daily routine, so the parent is enabled to be fully aware of the child's language learning experience and participate as best he/she can.

### System architecture

### Below, embodiments of the inventive system are described in more detail, with reference to figures 1-2.

**Fig. 1** shows a system 100, according to embodiments of the invention, for enabling contextual language learning, the system 100 comprising at least one context information device 120₁...120ₘ configured to generate a respective at least one context signal S_{CTXT_1}...S_{CTXT_m}, wherein each of the at least one context signal S_{CTXT_1}...S_{CTXT_m} is indicative of a current context that the respective at least one context information device 120₁...120ₘ is presently in. The contextual language learning device 110 is configured to obtain at least one context signal S_{CTXT_1}...S_{CTXT_m} from the respective at least one context information device 120₁...120ₘ, and to determine the current context that the contextual language learning device 110 is presently in, based on the at least one context signal S_{CTXT_1}...-S_{CTXT_m}.

The at least one context information device 120₁...120ₘ may in some embodiments comprise one or more beacon configured to be recognized using radio frequency communication. A non-limiting example of such a beacon is a radio frequency identification (RFID) sensor. In some embodiments, the at least one context information device 120₁...120ₘ may comprise one or more visual object configured to be recognized using any known method for image or pattern recognition. The visual object may be a real world object, a printed two or three dimensional object or image, or a digitally represented visual object of any form, for example as digital images of two or three dimensions, digital audio or video. In some embodiments, the at least one context information device 120₁...120ₘ may comprise one or more audio object configured to be recognized using signal processing or speech recognition. In some embodiments, the at least one context information device 120₁...120ₘ may comprise one or more contextual information based on performance history, or user profile information, or a combination. Performance history, or user/learner profile information may for example comprise what the learner has studied previously, which classes that the learner has attended, content that has been studied age, gender, interests, likes, dislikes, behavioural issues etc. This information may according to embodiments herein be combined with information on time, place, location etc., which enables adaptation of the language learning content to context not only from an objective point of view, but from the learner's viewpoint.

In some embodiments, the at least one context information device 120₁...120ₘ may comprise one or more sensor configured to measure at least one context parameter and to generate a context signal (S_{CTXT}) indicative of the measured at least one context parameter. In one or more embodiments, a selection of any or all of the above options may be comprised in the at least one context information device 120₁...120ₘ.

One or more of the at least one context information device 120₁...120ₘ may be default beacons, sensors, etc. that are associated with a specific contextual language learning device 110 and preconfigured with scenarios, such as for example a bedroom story beacon/sensor, and content adapted for specific contexts. The default content may in this case already be pre-stored in an internal memory of the contextual language learning device 110.

Each default beacon may have as a sticker on the back, so that it can be placed in/near or stick to an identified physical location (such as a bed)

As a non-limiting example, a beacon, a visual object, an audio object or measured sensor data may be mapped into a look-up table (LUT) stored in the source database 160, or an internal memory 165 of the contextual language learning device 110, to determine at least one context parameter associated with the beacon, visual object, audio object or measured sensor data.

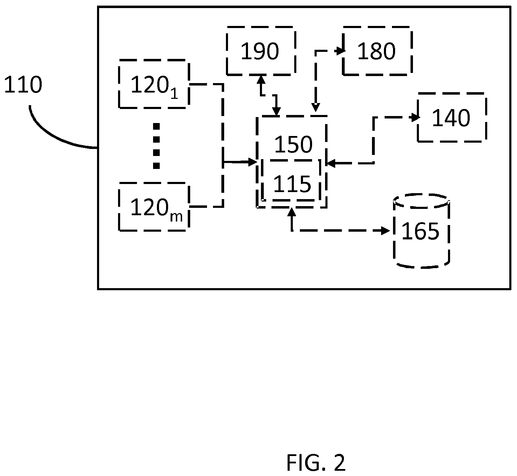

The system 100 further comprises a first interface 140 configured to enable communication between the contextual language learning device 110 and at least one content source 160 communicatively coupled to the contextual language learning device 110. A content source may in the present disclosure also be referred to as a database, a content database, or a source database. The system 100 may comprise a second interface 180 configured to enable communication between the contextual language learning device 110 and at least one support input device 130₁...130ₙ. The contextual language learning device 110 is further configured to receive, via the second interface 180, at least one support input signal S_{SI_1}...S_{SI_n} from a respective at least one support input device 130₁...130ₙ; and obtain at least one context based language learning action to be performed from at least one content source 160, via the first interface 140, or from at least one support input device 130₁...130ₙ, via the second interface 180. The at least one context based language learning action to be performed may be obtained based on the at least one context signal S_{CTXC_1}...S_{CTXT_m} or, if at least one support input signal S_{SI_1}...S_{SI_n} has been received, based on the at least one support input signal S_{SI_1}...S_{SI_n}, or based on both S_{CTXT_1}...S_{CTXT_m} and S_{SI_1}...S_{SI_n}. In other words, the at least one context based language learning action to be performed may be obtained from at least one content data base 160, based on the current context, and/or obtained from a support user 135 interacting with a support input device 130₁...130ₙ to input content or instructions appropriate for the current context or based on any other relevant parameter relating to performance history, or user/learner profile information, for example. Alternatively, or in combination, it may be obtained from an external data processor 145. The external data processor 145 may comprise machine learning logic, artificial intelligence, or other logic configured to evaluate previous learning input and draw conclusions on which content is appropriate for the specific context and/or user. As an alternative, or in combination, the contextual language learning device 110, or a processor 150 comprised in the contextual language learning device, as illustrated in **Fig. 2****,** may comprise the machine learning logic, artificial intelligence, or other logic. Logic rules or machine learning can be used to optimize system recommendations for next steps to take based on individual or collective data on the learner(s) and/or the language learning process gathered via the interfaces of system 100 according to embodiments presented herein. The at least one context based language learning action to be performed may also be obtained based on any combination of the options presented herein. To optimize system recommendations for next steps to take based on individual or collective data on the learner(s) and/or the language learning process gathered, collected and/or input via the interfaces of system 100 may herein also be referred to as generating, updating or regenerating a personalized language learning plan. As the machine learning algorithm or model, Al algorithm or model, or other logic is configured to evaluate previous learning input and draw conclusions on which content is appropriate for the specific context and/or user, it is in other words configured to predict language learning actions and/or interactions appropriate for the specific context and/or user based on the previous learning input. Embodiments of such optimization of system recommendations, or dynamic generation/updating/regeneration of a personalized language learning plan, are described in more detail in connection with the figures.

The experience based data is specific for each primary user 195. To generating experience based data, as defined herein, may be seen as how to assess the importance of the collected or input data to the specific user at the current time, by running said data through a trained machine learning logic in the form of e.g. a machine learning or Al network/algorithm/model configured to identify and recognize patterns related to language learning issues. Such patterns may be associated with certain conditions, aspects of language (e.g. grammar, pronunciation etc.) or behavioural issues (e.g. the user taking too long to answer/read etc., not repeating often enough to memorize, etc.). By predicting a suitable "diagnosis", or personal language learning issue, based on the experience based data, a suitable "cure" in the form of a new or updated language learning plan may be provided that matches the "diagnosis", whereby an improved language learning progress is enabled, specifically adapted to the primary user 195.

Determining current context, receiving input data, generating experience based data, predicting at least one language learning issue and generating a new or updated personalized language learning plan for the primary user 195 may advantageously be an iterative process, whereby the personalized language learning plan is continuously adapted to the primary user's 195 language learning development.

The contextual language learning device 110 is in one or more embodiments configured to receive data comprising one or more of: content and parameters stored in the database 160; data from the one or more context information devices 120₁...120ₘ; data from the one or more support input device 130₁...130ₙ; user input parameters obtained via the second or third interface 180, 190; and data stored in the contextual language learning device 110. In these embodiments, the contextual language learning device 110 is further configured to input the received data into a machine learning module 115. The machine learning module 115 comprises logic configured to process the received data to generate experience based data indicative of the language learning progress of a primary user 195 associated with the contextual language learning device 110; predict at least one language learning issue based on the generated experience based data; and generate a personalized language learning plan for a primary user 195 of the contextual language learning device 110, based on the predicted at least one language learning issue, wherein the personalized language learning plan indicates one or more language learning action associated with a respective context in which the language learning action is to be performed. The contextual language learning device is further configured to obtain from at least one content source, or database, 160, via the first interface 140, or from at least one support input device 130₁...130ₙ, via the second interface 180, at least one context based language learning action to be performed, based on the determined current context and the personalized language learning plan.

To obtain from at least one content source, or database, 160, via the first interface 140, or from at least one support input device 130₁...130ₙ, via the second interface 180, at least one context based language learning action to be performed may in any embodiment herein comprise determining at least one context based language learning action to be performed based on the current context and the personalized language learning plan, and to retrieve said at least one context based language learning action from the content source, or database, 160.

The machine learning module 115 may be in the form of a single module, or as a set of connected modules. The logic of the machine learning module may comprise one or more machine learning algorithm or model, one or more neural network, one or more Al algorithm or model and/or other types of suitable logic, and may be in different embodiments be implemented in the single module or implemented in more than one module in the set of connected module. According to a non-limiting embodiment, the machine learning logic may be implemented as one algorithm/model configured to process the received data to generate experience based data indicative of the language learning progress of a primary user 195 associated with the contextual language learning device 110, one algorithm/model configured to predict at least one language learning issue based on the generated experience based data, and one algorithm/model configured to generate a personalized language learning plan for a primary user 195 of the contextual language learning device 110, based on the predicted at least one language learning issue, wherein the personalized language learning plan indicates one or more language learning action associated with a respective context in which the language learning action is to be performed. The system 100 may further be configured to continuously train the machine learning logic (one or more algorithm/model etc.) based on new collected or input data from different primary users 195 and support users 135 connected to the system, and/or other relevant data.

In one or more embodiment, each of the at least one support input device 130₁...130ₙ may be configured to generate the respective at least one support input signal S_{SI_1}...S_{SI_n} in response to a support user 135 interacting with the support input device, for example by pressing one or more buttons, providing touch input via a touch display or other touch functionality, provide voice input/talk to the device via one or more microphone, provide motion input detectable by a motion sensor or computer vision system etc.

In one or more embodiment, each of the at least one support input device 130₁...130ₙ may alternatively, or in combination with the input option described above, be configured to generate the respective at least one support input signal S_{SI_1}...S_{SI_n} in response to receiving a control signal from the external data processor 145. The external data processor 145 may in turn be configured to generate and send a control signal to at least one support input device 130₁...130ₙ, the control signal triggering the at least one support input device 130₁...130ₙ to generate the respective at least one support input signal S_{SI_1}...S_{SI_n}.

Thereby, one or more support user 135 may be enabled to be involved and actively, in close to real time, participate in the language learning process, adapt the learning content and/or aid or encourage the learner. Alternatively, or in combination, one or more external data processor 145 may be enabled to be involved and actively, in close to real time, participate in the language learning process, adapt the learning content and/or aid or encourage the learner. The external data processor 145 may comprise machine learning or artificial intelligence (AI), according to any technology known in the art, enabling it to provide appropriate input depending on the situation.

Thereby, a support user 135 or the external data processor 145 is made aware of how the contextual language learning device 110 is used, based on behavioural patterns of the primary user 195, and is enabled to adjust the content accordingly for the best learning experience and personalization.

In one or more embodiments, the contextual language learning device 110 is further configured to, if a feedback sending condition is fulfilled, send a feedback signal S_{FB} indicative of the language learning progress or the usage of the contextual language learning device 110, or both, to at least one support input device 130₁...130ₙ, via the second interface 180, and/or to at least one content source 160, via the first interface 140.

Information indicative of the language learning or the usage of the contextual language learning device 110, or both, may according to some non-limiting examples comprise different ways for a support user 195 to receive evidence that the learner is learning. This may be enabled by providing and documenting tests (written, oral, interactive, etc.) that show the learning progress, or by the support user being able to see or hear the learner interacting with the contextual language learning device, either by being next to the learner, or by receiving documentation in the form of for example text, images, audio, video, VR, AR, etc.

Thereby, one or more support user 135 may be enabled to be, in close to real time, receive information prompted by the respective support input device 130₁...130ₙ, on the language learning progress and/or the usage of the contextual language learning device. Alternatively, or in combination, one or more external data processor 145 may be configured to receive information from the respective support input device 130₁...130ₙ, on the language learning progress and/or the usage of the contextual language learning device. Alternatively, or in combination, information of the language learning progress and/or the usage of the contextual language learning device 110 may be stored for future processing, for example by the data processor 150, the external data processor/machine learning device/AI device 145, or any other data processor communicatively coupled to the contextual language learning device 110, to enable future improved matching of content to context and/or learner.

In some embodiments, the system 100 comprises a machine learning module 115, for example comprised in the external data processor 145 or in the contextual language learning device 110, or a processor 150, which may be configured to generate experience based data for improved contextual language learning. In order to generate the experience based data, the machine learning module 115 may be configured to receive and process content and parameters stored in the database 160, data from the one or more context information devices 120₁...120ₘ and/or support input device 130₁...130ₙ, user input parameters obtained via the second or third interface 180, 190 and/or data from the contextual language learning device 110. The data may in this case for example comprise sensor read data, such as location data, time, temperature data, motion information, proximity data, radio frequency data, visual data, audio data, etc., or records of activities, such as "X did Y in context Z". A recorded activity could indicate a person reading something, a bot sending a message, time ticking, completion of a task such as "X finished Homework", etc. The content and parameters stored in the database 160 may comprise such data and/or recorded activities, and/or previously generated and stored experience based data. The data received from the one or more context information devices 120₁...120ₘ may comprise one or more feedback signal from the contextual language learning device 110.

The machine learning module 115 may further be configured to send experience based data to the contextual language learning device 110, and the contextual language learning device 110 may further be configured to obtain language learning content from the content database 160 based on the input parameters received from the machine learning module 115, in combination with one or more of the signals S_{CTXT_1}...S_{CTXT_m}, S_{SI_1}...S_{SI_n}, S_{UI} according to any of the embodiments herein. Alternatively, or in combination, one or more machine learning module 115 according to the embodiments above may be comprised in the contextual language learning device 110. The collection of physical data for adaptive learning is thereby non-intrusive and efficient. The collected data can be used for continuous or future improvement and development of the system and the language learning process. Machine learning, AI and analytics can for example be used to detect patterns of successful sequences of behaviour that can then be easily replicated across a wide user base.

In some embodiments, the feedback signal may be pulled from the contextual language learning device 110, for example by the at least one support input device 130₁...130ₙ being configured to send a feedback request to the contextual language learning device 110, and the feedback sending condition being considered to be fulfilled when such a feedback request has been has been received from at least one support input device 130₁...130ₙ. In other embodiments, the feedback signal may be pushed from the contextual language learning device 110, for example at one or more pre-set time instance or time interval, or after any, or a selected, language learning action has been performed by the contextual language learning device 110. The feedback sending condition may in these cases be considered to be fulfilled when such a pre-set time instance or time interval occurs or when such a language learning action has been performed. Any combination of the feedback options is also within the scope of the present solution.

In one embodiment, the contextual language learning device 110 may be configured to, using collected experience based data, dynamically generate, update or regenerate an improved personalized language learning plan, by predicting one or more language learning action(s) and/or interaction(s), and/or the context, order, timing etc. in which to trigger language learning actions and/or interactions, e.g., to improve the learning progress of the individual learner/primary user associated with the contextual language learning device in question. In some embodiments, the contextual language learning device 110 may be configured to dynamically generate, update or regenerate an improved personalized language learning plan by use of a machine learning or Al algorithm or model, possibly being a part of the machine learning or Al module 115, which algorithm or model may be configured to take experience based data as input and to output a prediction of one or more language learning action(s) and/or interaction(s), and/or the context, order, timing etc. in which to trigger language learning actions and/or interactions, e.g., to improve the learning progress of the individual learner/primary user associated with the contextual language learning device in question. In some embodiments, the machine learning or Al algorithm or model may comprise a Bayesian Knowledge Tracing algorithm, another Hidden Markov model, or any other suitable algorithm or model for performing such a prediction.

The at least one support input device 130₁...130ₙ may further be configured to present the feedback signal as audio, image, video, hologram, augmented reality, virtual reality and/or any other human perceptible presentation form, to the respective support user 135. The at least one support input device 130₁...130ₙ may alternatively, or in combination with presenting the feedback signal to the support user 135, be configured to the feedback signal to an external processing device 145 for further processing.

The second 180 interface may be implemented as a single interface or as multiple separate interfaces, each configured to enable communication between the contextual language learning device 110 and one or more of the at least one support input device 130₁...130ₙ.

The second interface 180 may be configured to enable communication between one support input device and one or more other support input device. In some embodiments, there may alternatively be provided one or more additional interface implemented in a respective support input device and being configured to enable communication between the respective support input device and one or more other support input device. Thereby, support users 135 may be enabled to interact directly with each other via their support input devices, with or without the contextual language learning device 110 being involved the interaction, to e.g. share information on how the learning process is progressing, exchange gathered data and/or feedback, and/or exchange ideas on which content should be presented to the learner, or primary user 195, when content should be presented, in what form, etc.. This further enables support users' possibility to influence the learning experience and adapt it to the needs and preferences of the learner, or primary user 195.

A non-limiting illustration of an "eco-system" for learning, according to embodiments presented herein, is presented in Fig. 7, which shows a schematic overview of communication between different devices according to one or more embodiments herein. Specifically, Fig. 7 shows a contextual language learning device 110 in a multiple-channel/ multiple device environment, the contextual language learning device 110 being communicatively connected to a number of support devices 130₁-130₉. In the figure, reference number 701 refers to support devices associated with the home environment, in this non-limiting example including a father 130₁, a mother 130₂ and a grand-parent 130₃; reference number 702 refers to support devices associated with the school environment, in this non-limiting example including a class 130₆, a teacher 130₇, one or more students 130₈ and a group 130₉; and reference number 703 refers to support devices associated with the "outside world" 703, outside of school and home, in this non-limiting example including one or more friends 130₄ and one or more community 130₅. As exemplified for the support devices associated with the school environment 702, the support devices included may also be connected to each other in different manners, not limited to the illustrational examples of Fig. 7, e.g. via the second 180 according to embodiments described herein. Fig. 7 further illustrates as part of the outside world 703, by the reference "world" 700, that any other device/social interaction platform etc. outside of school or the home, i.e., may be connected to the contextual language learning device 110, if appropriate.

The system 100 may further comprise a third interface 190 in the form of a user interface (Ul). In some embodiments, it is a graphical user interface (GUI). The third interface 190 may be configured to receive input from a primary user 195 interacting with the third interface 190, and may further be configured to provide output in the form of any combination of audio, image, video, haptic data, hologram, augmented reality, virtual reality or other suitable human perceptible output data. The primary user 195 is in the context of the present disclosure defined as a person interacting with the contextual language learning device 110. In different embodiments, the primary user 195 may for example be the learner, a person helping the learner setting up, adjusting or using the contextual language learning device 110, or a person participating in the learning experience. The primary user 195 may, in the case where the primary user is not the learner, be the same person as a support user 135, but now interacting with the contextual language learning device 110 instead of with a support input device 130₁...130ₙ.

The third interface 190 may further be configured to generate a primary user input signal S_{UI} in response to the received primary user input and send the primary user input signal S_{UI} to the contextual language learning device 110. The input may for example be in the form of text, audio, visual data, motion data, gyroscopic data, positional data and/or other relevant data generated in response to the primary user 195 interacting with the contextual language learning device 110 via the third interface 190, for example by pressing one or more buttons, providing touch input via a touch display or other touch functionality, provide voice input/talk to the device via one or more microphone, provide motion input detectable by a motion sensor or computer vision system etc. The contextual language learning device 110 may in turn further be configured to receive a user input signal S_{UI} from the third interface 190; interpret the user input signal S_{UI}, and:
- if the user input signal S_{UI} is interpreted as indicating content to be added, removed or updated, send the user input signal S_{UI} to at least one content source 160, via the first interface 140, wherein the at least one content source 160 is configured to store content in response to the received user input signal S_{UI}; or
- if the user input signal S_{UI} is not interpreted as indicating content to be added, further base the obtaining of at least one context based language learning action from the at least one content source 160 on the received user input signal S_{UI}.

In one or more embodiment, the third interface 190 may be connected or communicatively coupled to the context language learning device 110 and/or the content source 160.

In some embodiments, the contextual language learning device 110 is configured to generate output data D_{OUT}, based on the obtained at least one context based language learning action to be performed, and to present the output data D_{OUT} to the primary user 195, via the third interface 190. The output data D_{OUT} may for example comprise a selection of audio data, text, image, video, hologram, virtual reality, augmented reality or any other suitable type of human perceptible output data. In some non-limiting examples, the output data D_{OUT} may be indicative of a language learning action presented to a primary user 195 via the third interface 190. In other embodiments, the output data D_{OUT} may be a record of a language learning action. In such embodiments, the output data D_{OUT} may instead, or also, be sent, fed back, to the content database 160 via the first interface 140, to a support user 135 and/or the external data processor 145 via the second interface, or both. The output data D_{OUT} may be presented to a primary user 135 using any suitable technique known in the art, including, but not limited to, lights, a display, and loudspeakers. In some embodiments, the information presented may prompt the primary user 135 to interact with the contextual language learning device 110. For instance, the information may prompt the primary user 135 to provide input to the contextual language learning device 110 by pressing one or more buttons, providing touch input via a touch display or other touch functionality, provide voice input/talk to the device via one or more microphone, provide motion input detectable by a motion sensor or computer vision system etc.

In one or more embodiment, the contextual language learning device 110 may further be configured to receive, via the second interface 180 or the third interface 190, a content input signal S_{CI}. The content input signal S_{CI} may be indicative of, and/or comprise, new content to be added to the content source 160, content to be removed from the content source 160, or updates to be performed on content stored in the content source 160. The contextual language learning device 110 is in these embodiments configured to send the content input signal S_{CI} to the content source 160, possibly via the wireless network 170. Thereby, the content is continuously updated and stays relevant to the learner.

Turning now to **Fig. 2****,** the contextual language learning device 110 may in one or more embodiments comprise a data processor 150. In these embodiments, it is the data processor 150 that is configured to: obtain at least one context signal (SCTXT_1...SCTXT_m) from the respective at least one context information device (1201...120m); determine the current context that the contextual language learning device (110) is presently in, based on the at least one context signal (SCTXT_1...SCTXT_m); and receive data comprising one or more of: content and parameters stored in the database 160; data from the one or more context information devices 1201...120m; data from the one or more support input device 1301...130n; user input parameters obtained via the second or third interface 180, 190; and data stored in the contextual language learning device 110. In these embodiments, the data processor 150 is further configured to: input the received data into a machine learning module 115 configured to process the received data to generate experience based data indicative of the language learning progress of a primary user 195 associated with the contextual language learning device 110; and predict at least one language learning issue based on the generated experience based data; and the generate a personalized language learning plan for a primary user 195 of the contextual language learning device 110, based on the predicted at least one language learning issue, wherein the personalized language learning plan indicates one or more language learning action associated with a respective context in which the language learning action is to be performed; and the data processor 150 is further configured to obtain from at least one content source, or database, 160, via the first interface 140, or from at least one support input device 130₁...130ₙ, via the second interface 180, at least one context based language learning action to be performed, based on the determined current context and the personalized language learning plan.

The first, the second and/or the third interface (140, 180, 190) may be configured to enable two-way communication, as indicated in **Fig. 1****.** Any or all of the first, second and third interface (140, 180, 190) may be implemented as integrated units, or they may all be separate interfaces.

As can be seen from **Fig. 2****,** one or more context information device 120₁...120ₘ, the first interface 140, the second interface 180, and/or the third interface 190 may optionally be integrated parts of the contextual language learning device 110. Alternatively, any or all of these system parts may be connected or communicatively coupled, via a wired or wireless network, to the contextual language learning device 110. The contextual language learning device 110 may further comprise an internal memory 165. In some embodiments, the internal memory 165 may correspond to the content storage 160, mirror the content storage 160, or comprise parts of the content stored on the content storage 160.

The units of the system 100 may be configured to use any suitable wired and/or wireless communication technologies known in the art for communicating with each other.

In another aspect of the solution, the same advantages are achieved by a contextual language learning device 110 for enabling contextual language learning, the device 110 being configured to: obtain at least one context signal S_{CTXT_1}...S_{CTXT_m} from a respective at least one context information device 120₁...120ₘ, each of the at least one context signal S_{CTXT_1}...S_{CTXT_m} being indicative of a current context that the respective at least one context information device 120₁...120ₘ is presently in; determine the current context that the contextual language learning device 110 is presently in, based on the at least one context signal S_{CTXT_1}...S_{CTXT_m}; receive, via a second interface 180, at least one support input signal S_{SI_1}...S_{SI_n} from a respective at least one support input device 130₁...130ₙ; and obtain at least one context based language learning action to be performed from at least one content source 160, via a first interface 140 configured to enable communication between the contextual language learning device 110 and at least one content source 160 communicatively coupled to the contextual language learning device 110, based on the at least one context signal S_{CTXT_1}...S_{CTXT_m} and, if at least one support input signal S_{SI_1}...S_{SI_n} has been received, further based on the at least one support input signal S_{SI_1}...S_{SI_n}.

In some embodiments, the contextual language learning device 110 is further configured to, if a feedback sending condition is fulfilled, send a feedback signal S_{FB} indicative of the language learning progress and/or the usage of the contextual language learning device 110 to at least one support input device 130₁...130ₙ, via the first interface 140.

### Method embodiments

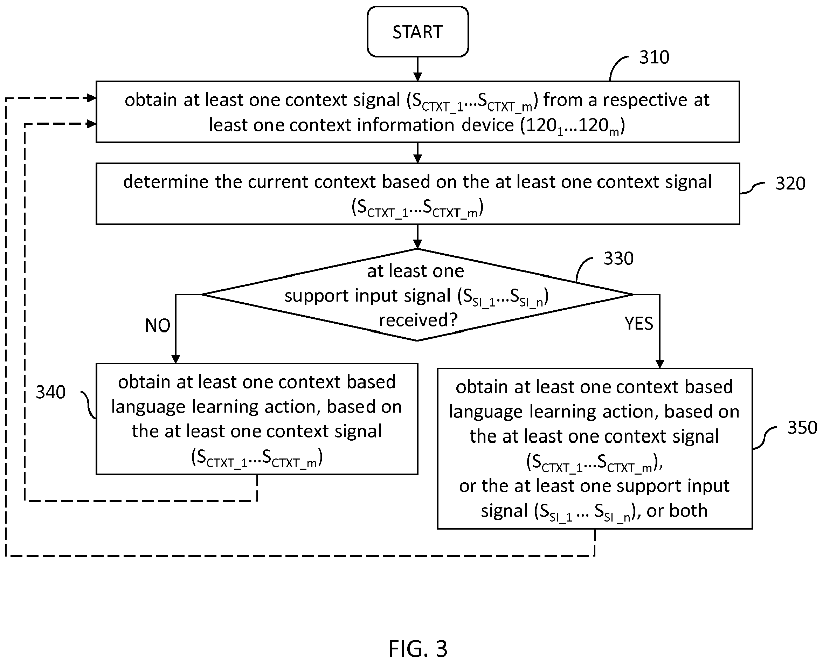

Turning now to figures 3, 4 and 5, we will describe method embodiments for enabling contextual language learning. **Fig. 3** shows a method according to one or more embodiments for enabling contextual language learning, the method comprising:
In step 310: obtaining, by the contextual language learning device 110, at least one context signal S_{CTXT_1}...S_{CTXT_m} from a respective at least one context information device 120₁...120ₘ, each of the at least one context signal S_{CTXT_1}...S_{CTXT_m} being indicative of a current context that the respective at least one context information device 120₁...120ₘ is presently in.

In step 320: determining, by the contextual language learning device 110, the current context that the contextual language learning device 110 is presently in, based on the at least one context signal S_{CTXT_1}...S_{CTXT_m}.

In step 330: receiving in the contextual language learning device 110, via a second interface 180, at least one support input signal S_{SI_1}...S_{SI_n} from a respective at least one support input device 130₁...130ₙ.

In one or more embodiment, each of the at least one support input device 130₁...130ₙ may be configured to generate the respective at least one support input signal S_{SI_1}...S_{SI_n} in response to a support user 135 interacting with the support input device, for example by pressing one or more buttons, providing touch input via a touch display or other touch functionality, provide voice input/talk to the device via one or more microphone, provide motion input detectable by a motion sensor or computer vision system etc.

In one or more embodiment, each of the at least one support input device 130₁...130ₙ may alternatively, or in combination with the input option described above, be configured to generate the respective at least one support input signal S_{SI_1}...S_{SI_n} in response to receiving a control signal from the external data processor 145. The external data processor 145 may in turn be configured to generate and send a control signal to at least one support input device 130₁...130ₙ, the control signal triggering the at least one support input device 130₁...130ₙ to generate the respective at least one support input signal S_{SI_1}...S_{SI_n}.

Step 330 may in one or more embodiment comprise checking whether at least one support input signal S_{SI_1}...S_{SI_n} has been received.

If at least one support input signal S_{SI_1}...S_{SI_n} has been received, the method continues in step 350.

If no support input signal S_{SI_1}...S_{SI_n} has been received, the method continues in step 350.

In step 340: obtaining, by the contextual language learning device 110, at least one context based language learning action to be performed from at least one content source 160, via a first interface 140 configured to enable communication between the contextual language learning device 110 and at least one content source 160 communicatively coupled to the contextual language learning device 110, based on the at least one context signal S_{CTXT_1}...S_{CTXT_m}.

In step 350: obtaining, by the contextual language learning device 110, at least one context based language learning action to be performed from at least one content source 160, via a first interface 140 configured to enable communication between the contextual language learning device 110 and at least one content source 160 communicatively coupled to the contextual language learning device 110, based on the at least one context signal S_{CTXT_1}...S_{CTXT_m} and further based on the at least one support input signal S_{SI_1}...S_{SI_n}.

The method according to steps 310 to 350 may be performed repeatedly, which is indicated by the dotted arrows from step 340 and 350, respectively, back to step 310 in Fig. 3.

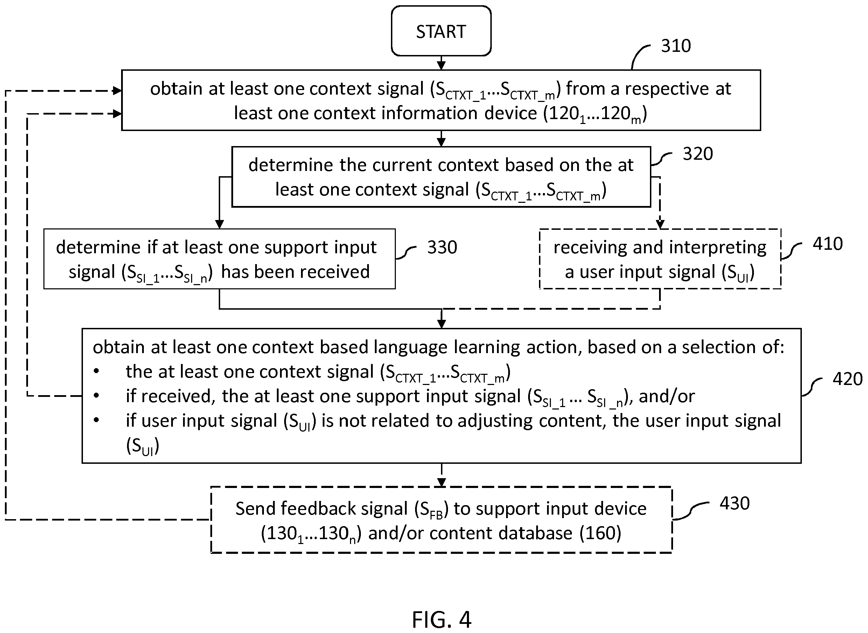

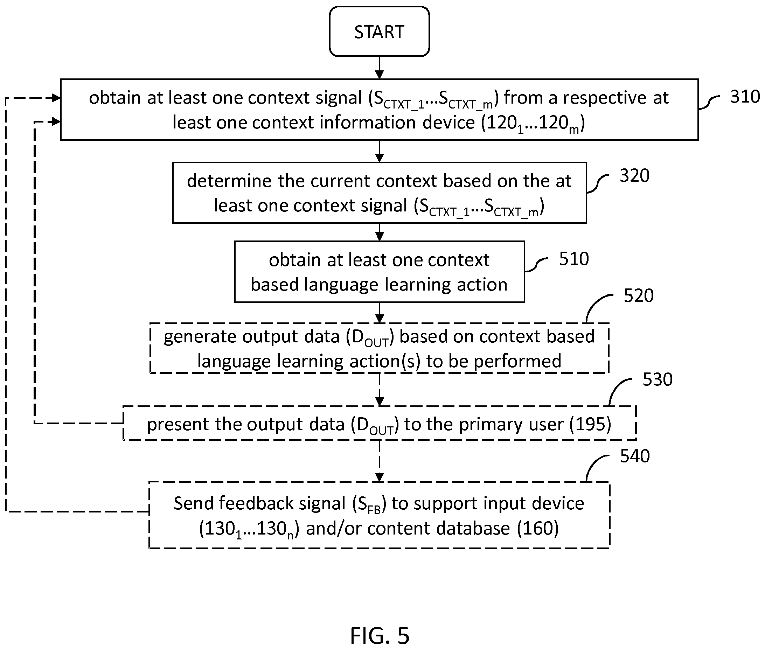

The method may further comprise, if a feedback sending condition is fulfilled, sending a feedback signal S_{FB} indicative of the language learning progress and/or the usage of the contextual language learning device 110 to at least one support input device 130₁...130ₙ, via the second interface 180. This is also illustrated in figures 4 and 5.

**Fig. 4** shows slightly different method embodiments, wherein steps 310 to 330 corresponds to the method of Fig. 3, but wherein the method of Fig. 4 further comprises:
In an optional step 410: receiving a user input signal S_{UI} from the third interface 190.

Optional step 410 further comprises interpreting the user input signal S_{UI}.

If the user input signal S_{UI} is interpreted as indicating content to be added, removed or updated, the method may further comprise sending the user input signal S_{UI} to at least one content source 160, via the first interface 140, to the external data processor 145 via the second interface 180, and/or to the internal storage 165, wherein the at least one content source 160/external data processor 145/ internal storage 165 is configured to store content in response to the received user input signal S_{UI}.

If the user input signal S_{UI} is not interpreted as indicating content to be added, the user input signal S_{UI} may be used as a basis for the obtaining of at least one context based language learning action, as described in Step 420.

In step 420: obtain at least one context based language learning action, based on a selection of: the at least one context signal S_{CTXT_1}...S_{CTXT_m}; if received, the at least one support input signal S_{SI_1} ... S_{SI_n}; if user input signal S_{UI} is not related to adjusting content, the user input signal S_{UI}; or a combination of any or all of these signal.

In an optional step 430: if a feedback sending condition is fulfilled, sending a feedback signal S_{FB} indicative of the language learning progress and/or the usage of the contextual language learning device 110 to at least one support input device 130₁...130ₙ, via the second interface 180, at least one content source 160, via the first interface 140, or both.

The method of Fig. 4 may be performed repeatedly, which is indicated by the dotted arrow from step 420 and 430, respectively, back to step 310.

**Fig. 5** shows yet slightly different method embodiments, wherein steps 310 to 320 are the same as the corresponding method steps of Fig. 3.

Step 510 comprises any or all method embodiments previously presented for obtaining at least one context based language learning action. Specifically, but not exclusively, step 510 comprises the options of steps 330, 340 and 350 presented in connection with Fig. 4, or steps 330, 410 and 420 presented in connection with Fig. 5. Alternatively, or in combination, step 510 may comprise any of the embodiments of step 840, presented in connection with Fig. 8. In other words, obtaining at least one context based language learning action in step 510 may be based on the parameters used as basis for obtaining the at least one context based language learning action in anu, or all, of the method steps 340. 350. 420 and 840.

The method of Fig. 5 further comprises:
In an optional step 520: generating output data D_{OUT}, based on the obtained at least one context based language learning action to be performed.

In step 530: present the output data D_{OUT} to the primary user 195, via a third interface 190. The output data D_{OUT} may be presented in any manner disclosed herein, or any other suitable manner known in the art.

In an optional step 540: if a feedback sending condition is fulfilled, sending a feedback signal S_{FB} indicative of the output data D_{OUT}, the language learning progress, the usage of the contextual language learning device 110, or a combination of two or more of these options, to at least one support input device 130₁...130ₙ, via the second interface 180, at least one content source 160, via the first interface 140, or both.

The method of Fig. 5 may be performed repeatedly, which is indicated by the dotted arrows from step 530 and 540, respectively, back to step 310.

**Fig. 8** shows further method embodiments for improved contextual language learning, wherein steps 310 to 320 are the same as the corresponding method steps of Fig. 3. The method of Fig. 8 further comprises:

**In step 810:** Receiving data comprising one or more of: content and parameters stored in the database 160; data from the one or more context information devices 120₁...120ₘ; data from the one or more support input device 130₁...130ₙ; user input parameters obtained via the second or third interface 180, 190; and/or data from the contextual language learning device 110.

**In step 820:** Processing, using a machine learning module 115, the received data to generate experience based data.

In one or more embodiment, processing the received data by the machine learning, or Al, module 115 to generate experience based data may comprise receiving and processing content and parameters stored in the database 160, data from the one or more context information devices 120₁...120ₘ and/or support input device 130₁...130ₙ, user input parameters obtained via the second or third interface 180, 190 and/or data from the contextual language learning device 110. The data may in this case for example comprise sensor read data, such as location data, time, temperature data, motion information, proximity data, radio frequency data, visual data, audio data, etc., or records of activities, such as "X did Y in context Z". A recorded activity could indicate a person reading something, a bot sending a message, time ticking, completion of a task such as "X finished Homework", etc. The content and parameters stored in the database 160 may comprise such data and/or recorded activities, and/or previously generated and stored experience based data. The data received from the one or more context information devices 120₁...120ₘ may comprise one or more feedback signal from the contextual language learning device 110.

The experience based data is specific for each primary user 195. To generating experience based data, as defined herein, may be seen as how to assess the importance of the collected or input data to the specific user at the current time, by running said data through a trained machine learning logic in the form of e.g. a machine learning or Al network/algorithm/model configured to identify and recognize patterns related to language learning issues. Such patterns may be associated with certain conditions, aspects of language (e.g. grammar, pronunciation etc.) or behavioural issues (e.g. the user taking too long to answer/read etc., not repeating often enough to memorize, etc.). By predicting a suitable "diagnosis", or personal language learning issue, based on the experience based data, a suitable "cure" in the form of a new or updated language learning plan may be provided that matches the "diagnosis", whereby an improved language learning progress is enabled, specifically adapted to the primary user 195.

The generated experience based data may be stored in the database 160 or a memory of the contextual language learning device 110, and may be fed back to step 810 the next time the method iterates, as part of the content and parameters stored in the database 160 or the data from the contextual language learning device 110.

**In step 830:** Predicting, using the machine learning module 115, at least one language learning issue based on the generated experience based data.

This may be seen as the trained machine learning logic predicting a "diagnosis" to be treated, based on the experience based data associated with the primary user 195.

**In step 840:** Generating, using the machine learning module 115, a personalized language learning plan for a primary user 195 of the contextual language learning device 110, based on the predicted at least one language learning issue, wherein the personalized language learning plan indicates one or more language learning action associated with a respective context in which the language learning action is to be performed.

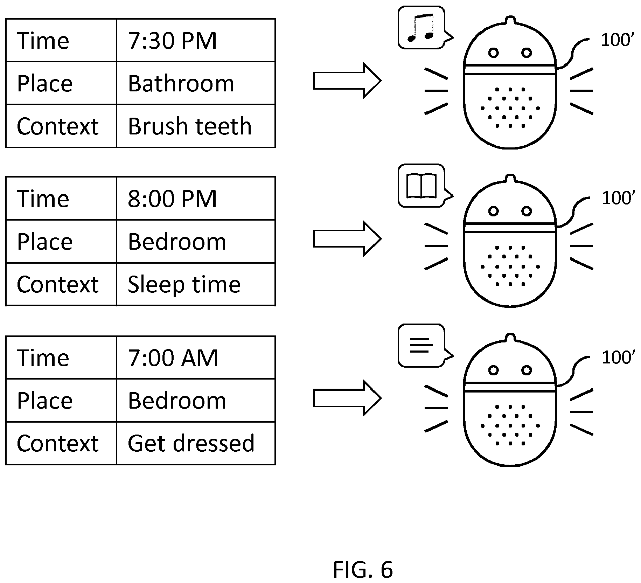

A personalized learning plan may comprise learning content to be presented to the primary user 195 via the third interface 190 and timing, location and/or other context for triggering presenting of different pieces of learning content, activation of language learning actions or interactions etc. A simple non-limiting example of a part of a is personalized learning plan is shown in Fig. 6, wherein a combination of Time, Place and Context triggers contextual language learning devices 110, 110' and 110" respectively to initiate a language learning action or interaction. In the non-limiting example of Fig. 6, contextual language learning device 110 is triggered to play a song related to brushing of teeth when it is time to brush the teeth in the evening (in this example at 7:30 PM) and the contextual language learning device 110 is present in the bathroom, as concluded from data received from one or more context information devices 120₁...120ₘ and/or support input device 130₁...130ₙ. The contextual language learning device 110' in the non-limiting example of Fig. 6 is triggered to play a bed time story when it is time to sleep (in this example at 8:00 PM) and the contextual language learning device 110 is present in the bedroom, as concluded from data received from one or more context information devices 120₁...120ₘ and/or support input device 130₁...130ₙ. In the non-limiting example of Fig. 6, contextual language learning device 110" is triggered to play a bed time story when it is time to sleep (in this example at 8:00 PM) and the contextual language learning device 110 is present in the bedroom, as concluded from data received from one or more context information devices 120₁...120ₘ and/or support input device 130₁...130ₙ. The contextual language learning device 110" in the non-limiting example of Fig. 6 is triggered to indicate by audio, e.g. speech, to the primary user 195 when it is time to get dressed (in this example at 7:00 AM) and the contextual language learning device 110 is present in the bedroom, as concluded from data received from one or more context information devices 120₁...120ₘ and/or support input device 130₁...130ₙ. The contextual language learning device 110 may here further be configured to prompt the learner/primary user 195 to respond in speech to the contextual language learning device 110, if suitable. Of course, alternative and possible more complex context determination may be performed, according to any of the embodiments presented herein, and any suitable language learning action or interaction may be triggered according to rules and logic of the generated personalized learning plan. The personalized language learning plan may be very complex in that it may span a large amount of actions to be performed, according to rules describing a certain planned order, timing information, in view of certain contexts etc., and may span over days, weeks, months or even years. According to embodiments described herein, the plan may be continuously adapted to the learning needs of the primary user 195, using data collected from data sources 160, the primary user 195, support users, as well as other actors active in the eco system described in connection with Fig. 7.

In one or more embodiments, generating a personalized learning plan based on experience based data may comprise using collected experience based data to, by the contextual language learning device 110, dynamically generate, update or regenerate an improved personalized language learning plan, by determining one or more language learning action(s) and/or interaction(s), and/or the context, order, timing etc. in which to trigger language learning actions and/or interactions, e.g., to improve the learning progress of the individual learner/primary user associated with the contextual language learning device in question. In some embodiments, this may comprise determining one or more language learning action(s) and/or interaction(s), and/or determining a context, order, timing etc. in which to trigger one or more language learning actions and/or interactions, e.g., to improve the learning progress of the individual learner, by a machine learning or Al algorithm comprised in the contextual language learning device 110, for example in the machine learning or Al module 115. The machine learning or Al module 115 may be integrated in the data processor 150.

The method may in these embodiments comprise inputting, into the machine learning or Al algorithm, experience based data and predicting, by the contextual language learning device 110, one or more language learning action(s) and/or interaction(s), and/or the context, order, timing etc. in which to trigger language learning actions and/or interactions, e.g., to improve the learning progress of the individual learner/primary user associated with the contextual language learning device in question. In some embodiments, the machine learning or Al algorithm may comprise a Bayesian Knowledge Tracing algorithm, another Hidden Markov Model, or any other suitable algorithm or model, or combination of algorithms or models, for performing such a prediction. In one or more non-limiting embodiments, the method may comprise assessing, by the machine learning or Al algorithm or model, the learner's language proficiency level, and further determining, by the contextual language learning device 110, one or more language learning action(s) and/or interaction(s), and/or the context, order, timing etc. in which to trigger language learning actions and/or interactions, e.g., to improve the learning progress of the individual learner also based on the assessed language proficiency level.

The generated personalized learning plan may be stored in the database 160 or a memory of the contextual language learning device 110, and may be fed back to step 810 the next time the method iterates, as part of the content and parameters stored in the database 160 or the data from the contextual language learning device 110.

**In step 850:** Obtain, by the contextual language learning device 110, at least one context based language learning action based on the generated personalized learning plan.

Step 850 may comprise obtaining, from at least one content source, or database, 160, via the first interface 140, or from at least one support input device 130₁...130ₙ, via the second interface 180, at least one context based language learning action to be performed, based on the determined current context and the personalized language learning plan.

The obtained at least one context based language learning action may be stored in the database 160 or a memory of the contextual language learning device 110, and may be fed back to step 810 the next time the method iterates, as part of the content and parameters stored in the database 160 or the data from the contextual language learning device 110.

As can be seen from Fig. 8, the method may be repeated, to provide a continuous adaptation of the personalized language learning plan. Information on the experience based data; the personalized language learning plan and/or the obtained actions to be performed may in such an iterative process be fed back to and received in Step 810, as part of the received data to be processed in Step 820.

The contextual language learning device 110, or the data processor 150, may be configured to perform any or all of the method steps described in connection with Fig. 8.

### Further embodiments

All of the process steps, as well as any sub-sequence of steps, described with reference to figures 3, 4 or 5 above may be controlled by means of a programmed data processor. Moreover, although the embodiments of the invention described above with reference to the drawings comprise a data processor and processes performed in at least one processor, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

In one or more embodiments, there may be provided a computer program loadable into a memory communicatively connected or coupled to at least one data processor, e.g. the data processor 150, comprising software for executing the method according any of the embodiments herein when the program is run on the at least one data processor 150.

In one or more further embodiment, there may be provided a processor-readable medium, having a program recorded thereon, where the program is to make at least one data processor, e.g. the data processor 150, execute the method according to of any of the embodiments herein when the program is loaded into the at least one data processor.

The invention is not restricted to the described embodiments in the figures, but may be varied freely within the scope of the claims.

### Non-limiting use case examples

When it is time for a shower, the learner brings the contextual language learning device 110 into the bathroom and the contextual language learning device 110 automatically identifies the context as shower time, by detecting a nearby pre-configured beacon as indicating "bathroom" and detecting the sound of running water via a context information device (120₁...120ₘ) in the form of a microphone. After determining the context, the contextual language learning device 110 obtains context based language learning actions to be performed from the content source 160 and it starts to interact with the learner. It may for instance ask, using audio output via a loudspeaker: "Oh, it's shower time again, shall we play a song?" If the learner responds "Yes!", the contextual language learning device 110 starts to play "head, shoulder, knees and toes knees and toes" using audio output via the loudspeaker. If a support user 135 is present, or a support user 135 or external data processor 145 is informed on the language learning action triggered via a support input device (130₁...130ₙ), and the conditions are such that the action triggered is not appropriate for some reason, on that specific day the learner may have taken an earlier shower for example, the support user 135 or external data processor 145 can provide input according to embodiments presented herein to account for the exception and adjust the contextual language learning action performed.

When it is time for bed, the learner brings the contextual language learning device 110 close to his/her bed, and the contextual language learning device 110 detects that the time is after 9 pm, and that the location is the bedroom, and therefrom determines the appropriate context as being bedtime. Based on the determined context, the contextual language learning device 110 obtains a bedtime story from the content source 160 and starts to present it to the learner using audio output via a loudspeaker and/or visual output on a display or using a hologram generator, a virtual reality device, an augmented reality device etc. The contextual language learning device 110 may also be aware, from storing this information in an internal memory 165 or the content source 160, that it stopped in the middle of the same story yesterday and continues to play the rest of the story. If a support user 135 is present, or a support user 135 or external data processor 145 is informed on the language learning action triggered via a support input device (130₁...130ₙ), the support user 135 or external data processor 145 can provide input according to embodiments presented herein to enrich and participate in the experience of the learner, for example by adding content such as images dinosaurs for a dinosaur story.

In a non-limiting example, a storytelling book may be equipped with a context information device (120₁...120ₘ) in the form of for example an RFID tag configured to, when the contextual language learning device 110 is within a certain distance from the context information device (120₁...120ₘ), identify the book and trigger the contextual language learning device 110 to start playing the story, via an audio output device. The contextual language learning device 110 may remember the last chapter played and continue with the next. Moreover, using other context information devices (120₁...120ₘ), such as ambient sensors, and possibly input a pre-defined story "rhythm", the contextual language learning device 110 may for example be configured to change its "voice" and possible lighting to create an appropriate story environment.

In an outdoor event, a support user in the form of a teacher may place context information devices (120₁...120ₘ) in the woods and set up a storyline with relevant language puzzles for a scavenger hunt game. Learners may team up and bring their respective contextual language learning device 110. The contextual language learning devices 110 may according to embodiments presented herein be triggered by context information devices (120₁...120ₘ) such as beacons, global positioning sensors (GPS), timers, or cue cards, to obtain various context related actions or interactions. In an example, the learners may further ask simple questions, recognized by the contextual language learning device 110 using language recognition technology, to get improved cues and language practices.

In one or more embodiments, each contextual language learning device 110 comprises a beacon, transmitter, transceiver, sensor or the like configured to uniquely identify the contextual language learning device 110. In a use case where two learners bring their respective contextual language learning devices 110 near to each other, within the range of the beacon, transmitter, transceiver, sensor, etc., the contextual language learning devices 110 can identify each other. The contextual language learning devices 110 may in response to identifying the other output audio - speak - to greet each other. The learners may in some embodiments compete against each other, by gaining scores based on how well their "masters", i.e. the learners, "feed them" with the target language. In this example, the contextual language learning devices 110 may keep score, keep the learners updated on the progress and encourage them to interact more in the target language to gain more points. This is for example an enticing way student to perform homework, and further a fun way for young children to practice a target language.

In another use case example, a support user 135 may provide input via a support input device (130₁...130ₙ) via a microphone, by speaking in the support users native language (e.g. "Vamos acordar a vovo" in Portuguese), and the contextual language learning device 110 may be configured to perform speech to text conversion on the input speech, translate the text into the target language, perform text to speech conversion on the translation, and output the result to the learner as audio, via the third interface 190 ("Let's go wake up grandma").

## Claims

1. A system (100) for enabling contextual language learning, the system (100) comprising:
at least one context information device (120₁...120ₘ) configured to generate a respective at least one context signal (S_{CTXC_1}...S_{CTXT_m}), wherein each of the at least one context signal (S_{CTXT_1}...S_{CTXT_m}) is indicative of a current context that the respective at least one context information device (120₁...120ₘ) is presently in;
a contextual language learning device (110) configured to:
- obtain at least one context signal (S_{CTXC_1}...S_{CTXT_m}) from the respective at least one context information device (120₁...120ₘ); and
- determine the current context that the contextual language learning device (110) is presently in, based on the at least one context signal (S_{CTCT_1}...S_{CTXT_m});
a first interface (140) configured to enable communication between the contextual language learning device (110) and at least one database (160) communicatively coupled to the contextual language learning device (110); and
wherein the contextual language learning device (110) is further configured to:
- receive data comprising one or more of: content and parameters stored in the database 160; data from the one or more context information devices 120₁...120ₘ; data from the one or more support input device 130₁...130ₙ; user input parameters obtained via a second or third interface 180, 190; and data stored in the contextual language learning device 110;
- input the received data into a machine learning module 115, wherein the machine learning module 115 comprises logic configured to:
• process the received data to generate experience based data indicative of the language learning progress of a primary user 195 associated with the contextual language learning device;
• predict at least one language learning issue based on the generated experience based data; and
• generate a personalized language learning plan for a primary user 195 of the contextual language learning device 110, based on the predicted at least one language learning issue, wherein the personalized language learning plan indicates one or more language learning action associated with a respective context in which the language learning action is to be performed; and
- obtain from at least one database (160), via the first interface (140), or from at least one support input device (130₁...130ₙ), via the second interface (180), at least one context based language learning action to be performed, based on the determined current context and the personalized language learning plan.

2. The system (100) of claim 1, further comprising a second interface (180) configured to enable communication between the contextual language learning device (110) and at least one support input device (130₁...130ₙ), wherein the contextual language learning device (110) is further configured to:
receive, via the second interface (180), at least one support input signal (S_{SI_1}...S_{SI _n}) from a respective at least one support input device (130₁...130ₙ); and
obtain from at least one database (160), via the first interface (140), or from at least one support input device (130₁...130ₙ), via the second interface (180), at least one context based language learning action to be performed also based on the at least one support input signal (S_{SI_1}...S_{SI_n}).

3. The system (100) of claim 1 or 2, wherein the contextual language learning device (110) is further configured to, if a feedback sending condition is fulfilled, send a feedback signal S_{FB} indicative of the language learning progress and/or the usage of the contextual language learning device (110) to:
at least one support input device (130₁...130ₙ), via the second interface (180); and/or
at least one database (160), via the first interface (140).

4. The system (100) of any of the preceding claims, wherein the contextual language learning device (110) comprises a data processor (150) configured to:
- obtain at least one context signal (S_{CTXC_1}...S_{CTXT_m}) from the respective at least one context information device (120₁...120ₘ);
- determine the current context that the contextual language learning device (110) is presently in, based on the at least one context signal (S_{CTXT_1}...S_{CTXT_m});
- receive data comprising one or more of: content and parameters stored in the database (160); data from the one or more context information devices (120₁...120ₘ); data from the one or more support input device (130₁...130ₙ); user input parameters obtained via a second or third interface (180, 190); and data stored in the contextual language learning device (110);
- input the received data into a machine learning module (115), wherein the machine learning module (115) comprises logic configured to:
• process the received data to generate experience based indicative of the language learning progress of a primary user (195) associated with the contextual language learning device (110);
• predict at least one language learning issue based on the generated experience based data; and
• generate a personalized language learning plan for a primary user (195) of the contextual language learning device (110), based on the predicted at least one language learning issue, wherein the personalized language learning plan indicates one or more language learning action associated with a respective context in which the language learning action is to be performed; and
- obtain from at least one database (160), via the first interface (140), or from at least one support input device (130₁...130ₙ), via the second interface (180), at least one context based language learning action to be performed, based on the determined current context and the personalized language learning plan.

5. The system (100) of any of the previous claims, wherein at least one context information device (120₁...120ₘ) comprises a selection of:
one or more beacon configured to be recognized using radio frequency communication;
one or more visual object configured to be recognized using image recognition;
one or more audio object configured to be recognized using signal processing or speech recognition;
one or more contextual information based on performance history and/or user profile; and/or
one or more sensor configured to measure at least one context parameter (P_{CTXT}).

6. The system (100) of any of the previous claims, further comprising a third interface (190), wherein the third interface (190) is a user interface configured to:
receive input from a primary user (195) interacting with the third interface (190);
generate a user input signal (S_{UI}) in response to the received user input; and
send the user input signal (S_{UI}) to the contextual language learning device (110),
wherein the contextual language learning device (110) is further configured to:
receive a user input signal (S_{UI}) from the third interface (190);
interpret the user input signal (S_{UI}), and
- if the user input signal (S_{UI}) is interpreted as indicating content to be added, removed or updated, send the user input signal (S_{UI}) to at least one database (160), via the first interface (140), wherein the at least one database (160) is configured to store, remove or update content in response to the received user input signal (S_{UI}); or
- if the user input signal (S_{UI}) is not interpreted as indicating content to be added, further base the obtaining of at least one context based language learning action from the at least one database (160) on the received user input signal (S_{UI}).

7. The system (100) of claim 6, wherein the contextual language learning device (110) is further configured to:
generate output data (D_{OUT}), based on the obtained at least one context based language learning action to be performed; and
present the output data (D_{OUT}) to the primary user (195), via the third interface (190).

8. The system (100) of any of the previous claims, wherein the contextual language learning device (110) is further configured to receive, via the second interface (180), a content input signal (S_{CI}) indicative of new content to be added to the database and/or an association between a context information device (120₁...120ₘ) and a specified content item.

9. A contextual language learning device (110) for enabling contextual language learning, the device (110) being configured to:
- obtain at least one context signal (S_{CTXC_1}...S_{CTXT_m}) from the respective at least one context information device (120₁...120ₘ); and
- determine the current context that the contextual language learning device (110) is presently in, based on the at least one context signal (S_{CTXT_1}...S_{CTXT_m});
a first interface (140) configured to enable communication between the contextual language learning device (110) and at least one database (160) communicatively coupled to the contextual language learning device (110); and
wherein the contextual language learning device (110) is further configured to:
- receive data comprising one or more of: content and parameters stored in the database (160); data from the one or more context information devices (120₁...120ₘ); data from the one or more support input device (130₁...130ₙ); user input parameters obtained via a second or third interface (180, 190); and data stored in the contextual language learning device (110);
- input the received data into a machine learning module (115), wherein the machine learning module (115) comprises logic configured to:
• process the received data to generate experience based data indicative of the language learning progress of a primary user (195) associated with the contextual language learning device (110);
• predict at least one language learning issue based on the generated experience based data; and
• generate a personalized language learning plan for a primary user (195) of the contextual language learning device (110), based on the predicted at least one language learning issue, wherein the personalized language learning plan indicates one or more language learning action associated with a respective context in which the language learning action is to be performed; and
- obtain from at least one database (160), via the first interface (140), or from at least one support input device (130₁...130ₙ), via the second interface (180), at least one context based language learning action to be performed, based on the determined current context and the personalized language learning plan.

10. The contextual language learning device (110) of claim 9, further comprising a second interface (180) configured to enable communication between the contextual language learning device (110) and at least one support input device (130₁...130ₙ), wherein the contextual language learning device (110) is further configured to:
receive, via the second interface (180), at least one support input signal (S_{SI_1}...S_{SI _n}) from a respective at least one support input device (130₁...130ₙ); and
obtain from at least one database (160), via the first interface (140), or from at least one support input device (130₁...130ₙ), via the second interface (180), at least one context based language learning action to be performed also based on the at least one support input signal (S_{SI_1}...S_{SI_n}).

11. The contextual language learning device (110) of claim 9 or 10, further being configured to, if a feedback sending condition is fulfilled, send a feedback signal S_{FB} indicative of the language learning progress and/or the usage of the contextual language learning device (110) to:
at least one support input device (130₁...130ₙ), via the second interface (180); and/or
at least one database (160), via the first interface (140), and possibly via the network (170).

12. The contextual language learning device (110) of claim 9 to11, further being configured to:
generate output data (D_{OUT}), based on the obtained at least one context based language learning action to be performed; and
present the output data (D_{OUT}) to the primary user (195), via a third interface (190).

13. A method in a contextual language learning device (110) for enabling contextual language learning, the method comprising:
obtaining, by the contextual language learning device (110), at least one context signal (S_{CTXT_1}...S_{CTXT_m}) from a respective at least one context information device (120₁...120ₘ), each of the at least one context signal (S_{CTXT_1}...S_{CTXT_m}) being indicative of a current context that the respective at least one context information device (120₁...120ₘ) is presently in;
determining, by the contextual language learning device (110), the current context that the contextual language learning device (110) is presently in, based on the at least one context signal (S_{CTXT_1}...S_{CTXT_m});
receiving data comprising one or more of: content and parameters stored in the database (160); data from the one or more context information devices (120₁...120ₘ); data from the one or more support input device (130₁...130ₙ); user input parameters obtained via the second or third interface (180, 190); and data stored in the contextual language learning device (110);
inputting the received data into a machine learning module (115), wherein the machine learning module (115) comprises logic configured to:
- process the received data to generate experience based data indicative of the language learning progress of a primary user (195) associated with the contextual language learning device (110);
- predict at least one language learning issue based on the generated experience based data; and
- generate a personalized language learning plan for the primary user (195) associated with the contextual language learning device (110), based on the predicted at least one language learning issue, wherein the personalized language learning plan indicates one or more language learning action associated with a respective context in which the language learning action is to be performed; and
obtaining from at least one database (160), via the first interface (140), or from at least one support input device (130₁...130ₙ), via the second interface (180), at least one context based language learning action to be performed, based on the determined current context and the personalized language learning plan.

14. The method of claim 13, further comprising receiving in the contextual language learning device (110), via a second interface (180), at least one support input signal (S_{SI_1}...S_{SI_n}) from a respective at least one support input device (130₁...130ₙ), wherein obtaining, by the contextual language learning device (110), at least one context based language learning action to be performed is further based on the at least one support input signal (S_{SI_1}...S_{SI_n}).

15. The method of claim 13 or 14, further comprising, if a feedback sending condition is fulfilled, sending a feedback signal (S_{FB}) indicative of the language learning progress and/or the usage of the contextual language learning device (110) to:
at least one support input device (130₁...130ₙ), via the second interface (180), and/or
at least one database (160), via the first interface (140).

16. The method of any of the claims 13 to 15, further comprising:
generating output data (D_{OUT}), based on the obtained at least one context based language learning action to be performed; and
presenting the output data (D_{OUT}) to a primary user (195), via a third interface (190).

17. A computer program loadable into a memory communicatively connected or coupled to at least one data processor, comprising software for executing the method according any of the method claims 13 to 16 when the program is run on the at least one data processor.

18. A processor-readable medium, having a program recorded thereon, where the program is to make at least one data processor execute the method according to of any of the method claims 13 to 16 when the program is loaded into the at least one data processor.
